# EUROPEAN PATENT APPLICATION

(11) **EP 2 871 163 A1**
(43) Date of publication of application: **13.05.2015**
(21) Application number: 13191901.1
(22) Date of filing: 07.11.2013
(51) Int. Cl.: C02F 1/26, C02F 103/36, C02F 1/20, C02F 101/34, C02F 1/04, C02F 101/32, C02F 9/00

(54) **Process for removing oxygenates from an aqueous stream**

(71) Applicant: SHELL INTERNATIONAL RESEARCH MAATSCHAPPIJ B.V., 2596 HR Den Haag (NL)
(72) Inventor: The designation of the inventor has not yet been filed
(74) Representative: Matthezing, Robert Maarten

(57) **Abstract**

The invention relates to a process for removing oxygenates from an aqueous stream which comprises hydrocarbons, oxygenates having a limited solubility in water and oxygenates having an unlimited solubility in water, which process comprises adding to the aqueous stream additional oxygenates with a limited solubility in water in an amount which is effective to maintain or establish a water phase and an organic phase in the aqueous stream.

## Description

### Field of the Invention

The present invention relates to process for removing oxygenates from an aqueous stream.

### Background of the Invention

Many waste water streams such as those generated by chemical plants, municipal waste and waste water plants, food manufacturing facilities, industrial factories, petroleum refineries and animal farms typically contain high concentrations of organic compounds that need to be removed from such waste streams in view of increasing environmental constraints. Such organic compounds include hydrocarbons, alcohols and oxygenates. In environmental chemistry, the chemical oxygen demand (COD) test is commonly used to indirectly measure the amount of such organic compounds in water, whereby COD is expressed in milligrams per litre (mg/l).

Organic compounds that contribute to COD can be removed from waste water streams by means of physical, chemical and/or biological processes. An often used process to remove COD contaminants from waste water streams is to subject the waste water streams to a distillation step in which the COD contaminants are stripped off water in a distillation column and separately recovered. Such distillation processes leave, however, much room for improvement in terms of separation efficiency, energy consumption and operation stability.

Object of the present invention is to provide an improved process for removing COD contaminants from an aqueous stream.

### Summary of the invention

It has now been found that this can be established by adding to the aqueous stream to be treated additional oxygenates with a limited solubility in water.

Accordingly, the present invention relates to a process for removing oxygenates from an aqueous stream which comprises hydrocarbons, oxygenates having a limited solubility in water and oxygenates having an unlimited solubility in water, which process comprises adding to the aqueous stream additional oxygenates with a limited solubility in water in an amount which is effective to maintain or establish a water phase and an organic phase in the aqueous stream.

In accordance with the present invention organic compounds including oxygenates are recovered from an aqueous stream to a greater extent, whilst the process displays a high operational stability and consumes less energy when compared to known methods in which COD contaminants are removed from waste water streams by way of distillation.

### Detailed description of the invention

The improved recovery of COD contaminants such as oxygenates is established in accordance with the invention by adding oxygenates with a limited solubility in water in an amount which is effective to maintain or establish a water phase and an organic phase in the aqueous phase. In this way, organic compounds such as oxygenates will more easily migrate into the organic phase which can subsequently be removed from the water phase after which the COD contaminants can be recovered.

The oxygenates having a limited solubility in water which are to be added to the aqueous stream to be treated are suitably selected from the group consisting of alcohols having more than 3 carbon atoms, aldehydes having more than 2 carbon atoms, ketones having more than 2 carbon atoms, ethers having at least 2 carbon atoms and carboxylic acids having more than 3 carbon atoms.

Preferably, the additional oxygenates with a limited solubility in water comprise one or more oxygenate components having a ratio of oxygen atoms to carbon atoms (O/C) of larger than 6 and/or octanol.

Suitable alcohols having more than 3 carbon atoms include butanol, isobutanol, pentanol, 1-hexanol, 2-hexanol, 3-hexanol, heptanol, octanol and nonanol. A preferred alcohol having more than 3 carbon atoms is include octanol.

Suitable aldehydes having more than 2 carbon atoms include acetalaldehyde, propionaldehyde, butyraldehyde, benzaldehyde, cinnamaldehyde, tolualdehyde, furfural and retinaldehyde.

Suitable ketones having more than 2 carbon atoms include acetone, propanone, 2-butanone, 3-methyl-2-butanone, 3-hexanone and 2-pentanone.

Suitable ethers having at least 2 carbon atoms include dimethylether, diethylether, tetrahydrofuran and dioxane.

Suitable carboxylic acids having more than 3 carbon atoms include propionic acid, butyric acid, valeric acid, caproic acid, enanthic acid, caprylic acid, capeic acid, lauric acid, tridecylic acid, myristic acid, palmitic acid and stearic acid.

Suitably, any mixture of the above-mentioned alcohols, ethers, aldehydes, ketones and carboxylic acids can be used.

Oxygenates having an unlimited solubility in water which are suitably present in the aqueous stream to be treated include methanol, ethanol, propanol, and isopropanol.

The hydrocarbons which are present in the aqueous stream to be treated include benzene, alkylbenzenes, n-alkanes and polycyclic aromatic hydrocarbons.

The oxygenates with a limited solubility in water are suitably present in the aqueous stream in an amount of 0.000001-50 wt, based on the total weight of the aqueous stream.

The oxygenates with an unlimited solubility in water are present in the aqueous stream in an amount of 0.000001-50 wt%, based on the total weight of the aqueous stream.

The hydrocarbons are present in the aqueous stream in an amount of 0.000001-50 wt%, based on the total weight of the aqueous stream.

The additional oxygenates having a limited solubility in water are suitably added to the aqueous stream in an amount of at most 50 wt%, based on the total weight of the aqueous stream.

The process according to the present invention is suitably carried out at a temperature in the range of 20-200 °C.

Suitably, the aqueous stream from which oxygenates are to be removed in accordance with the present invention is a distillate derived from a process water or waste water stream. The process water or waste water stream may be any process or waste water stream. Preferably, however, the process water or waste water stream is derived from a chemical plant or a petroleum refinery. More preferably, the aqueous stream from which oxygenates are to be removed is process water or waste water stream is obtained from a Fischer-Tropsch process in which gaseous components are converted into liquid hydrocarbons.

In the present process suitably use is made of a distillation unit. The aqueous stream to be treated in accordance with the invention is suitably introduced into a lower part of a distillation column. In the distillation column the aqueous stream will flow upwards through the distillation unit and during the distillation oxygenates and hydrocarbons will be stripped from the aqueous stream and will migrate into the organic phase. From an upper part of the distillation unit a gaseous stream can suitably be withdrawn which contains the organic phase and part of the water of the aqueous stream, whereas a remaining and purified water phase in the distillation unit can be withdrawn at a lower part of the distillation unit.

Subsequently, at least part of the organic phase is subsequently removed from the water which is present in the gaseous stream, and at least part of the water stream so obtained is recycled as reflux to the distillation unit.

Accordingly, the present invention also relates to a process for removing oxygenates from an aqueous stream which comprises hydrocarbons, oxygenates having a limited solubility in water and oxygenates having an unlimited solubility in water, which process comprises: introducing the aqueous stream into a distillation unit; adding to the aqueous stream additional oxygenates with a limited solubility in water in an amount which is effective to maintain or establish a water phase and an organic phase in the aqueous stream; withdrawing from an upper part of the distillation unit a gaseous stream which contains at least part of the organic phase and at least part of the water of the aqueous stream; withdrawing from a lower part a liquid stream which comprises at least part of the purified water phase; removing at least part of the organic phase from the water which is present in the gaseous stream thereby obtaining an aqueous stream; and recycling at least part of the aqueous stream as obtained from the gaseous stream as reflux to the distillation unit.

A variety of distillation units can be used in accordance with the present invention.

Preferably, the entire aqueous stream as obtained from the gaseous stream is recycled as reflux to the distillation unit.

Suitably, at least part of the organic phase is removed from the water which is present in the gaseous stream in an extraction unit which is located downstream of the distillation unit. In the extraction unit at least part of the organic phase is withdrawn and recovered from an upper part of the extraction unit and the aqueous stream as obtained from the gaseous stream is in the form of a condensate withdrawn from a lower part of the extraction unit, and at least part of the aqueous stream as obtained from the gaseous stream is recycled to the distillation unit.

The removal of water in the extraction unit is suitably carried out at a temperature in the range of 20-200 °C.

The additional oxygenates with a limited solubility which are added to the aqueous stream in accordance with the invention can be added to the process at different stages. The additional additives can for instance be added to the aqueous stream in the distillation unit, to the gaseous stream in the line connecting the distillation unit and the extraction unit, to the extraction unit as such in which at least part of the organic phase is removed from the water present in the gaseous stream, or to aqueous stream as obtained from the gaseous stream in the recycle line before the aqueous stream is recycled as reflux to the distillation unit.

Preferably, the additional oxygenates having a limited solubility in water are added to the gaseous stream as withdrawn from an upper part of the distillation unit. Preferably, the additional oxygenates are counter currently contacted with the gaseous stream. More preferably, the additional oxygenates are counter currently contacted with the gaseous stream in an extraction unit.

Suitably, the addition of the additional oxygenates having a limited solubility in water is controlled by the level of the remaining organic phase which is present in the aqueous stream as obtained. The level of the remaining organic phase present in the aqueous phase is suitably measured by means of a level control system which is arranged downstream the distillation unit, preferably in the extraction unit in which at least part of the organic phase is separated from the water present in the gaseous phase. On the basis of the level of the remaining organic phase present in the aqueous stream as obtained from the gaseous stream the amount of the additional oxygenates that need to be added to the aqueous stream to maintain or establish the organic phase is determined, and the required amount of additional oxygenates is added to the aqueous stream to be treated. Suitably, the addition of the additional oxygenates is controlled in a continuous manner.

In accordance with the present invention at least part of the organic phase is separated from the water present in the gaseous phase as withdrawn from an upper part of the distillation unit, preferably in an extraction unit which is arranged downstream of the distillation unit. Preferably, at least part of the additional oxygenates having a limited solubility in water which are added to the aqueous stream are derived from at least part of the organic phase which is separated from the gaseous stream as withdrawn from an upper part of the distillation unit.

Suitably, the liquid stream as withdrawn from a lower part of the distillation column has a COD content between 1200-1800 ppw.

## Claims

1. Process for removing oxygenates from an aqueous stream which comprises hydrocarbons, oxygenates having a limited solubility in water and oxygenates having an unlimited solubility in water, which process comprises adding to the aqueous stream additional oxygenates with a limited solubility in water in an amount which is effective to maintain or establish a water phase and an organic phase in the aqueous stream.

2. Process according to claim 1, wherein the added oxygenates having a limited solubility in water are selected from the group consisting of alcohols having more than 3 carbon atoms, aldehydes having more than 2 carbon atoms, ketones having more than 2 carbon atoms, ethers having at least 2 carbon atoms and carboxylic acids having more than 3 carbon atoms.

3. Process according to claim 2, wherein the additional oxygenates with a limited solubility in water comprise one or more oxygenate components having a ratio of oxygen atoms to carbon atoms (O/C) of larger than 6 and/or octanol.

4. Process according to any one of claims 1-3, wherein the oxygenates with a limited solubility in water are present in an amount of 0.000001-50 wt%, based on the total weight of the aqueous stream.

5. Process according to any one of claims 1-4, wherein the oxygenates with an unlimited solubility in water are present in an amount of 0.000001-50 wt%, based on the total weight of the aqueous stream.

6. Process according to any one of claims 1-5, wherein the hydrocarbons are present in an amount of 0.000001-50 wt%, based on the total weight of the aqueous stream.

7. Process according to any one of claims 1-6, wherein the additional oxygenates having a limited solubility in water are added to the aqueous stream in an amount of at most 50 wt%, based on the total weight of the aqueous stream.

8. Process according to any one of claims 1-7 which is carried out at a temperature in the range of 20-200 °C.

9. Process according to any one of claims 1-8, wherein the aqueous stream from which oxygenates are to be removed is a distillate derived from a process water or waste water stream.

10. Process according to any one of claims 1-9, wherein at least part of the organic phase is separated from the water phase and at least part of the additional oxygenates having a limited solubility in water which are added to the aqueous stream are derived from the separated organic phase.

11. Process according to any one of claims 1-10, which process comprises: introducing the aqueous stream into a distillation unit; adding to the aqueous stream additional oxygenates with a limited solubility in water in an amount which is effective to maintain or establish a water phase and an organic phase in the aqueous stream; withdrawing from an upper part of the distillation unit a gaseous stream which contains at least part of the organic phase and at least part of the water present in the aqueous stream; withdrawing from a lower part a liquid stream which contains at least part of the purified water phase; removing at least part of the organic phase from the water which is present in the gaseous stream thereby obtaining an aqueous stream; and recycling at least part of the aqueous stream as obtained from the gaseous stream as reflux to the distillation unit.

12. Process according to any one of claims 1-11, wherein the aqueous stream from which oxygenates are to be removed is derived from a Fischer-Tropsch process.

13. Process according to claim 11 or 12, wherein the addition of the additional oxygenates having a limited solubility in water is controlled by the level of the remaining organic phase in the aqueous stream as obtained from the gaseous stream which is withdrawn fron an upper part of the distillation column.

14. Process according to any one of claims 10-13, wherein the additional oxygenates having a limited solubility in water are counter currently contacted with the gaseous stream which is withdrawn from an upper part of the distillation unit.

15. Process according to claim 14, wherein the additional oxygenates are contacted with the gaseous stream in an extraction unit.
